# EUROPÄISCHE PATENTSCHRIFT

(11) **EP 3 103 624 B1**
(45) Veröffentlichungstag und Bekanntmachung des Hinweises auf die Patenterteilung: **03.05.2017**
(21) Anmeldenummer: 15171190.0
(22) Anmeldetag: 09.06.2015
(51) Int. Cl.: B29C 70/32, B29C 70/02, B29C 41/04, B29C 67/24, F16L 9/12

(54) **VERFAHREN ZUR HERSTELLUNG EINES MEHRSCHICHTIGEN ROHRES ENTHALTEND MIKROFASERN, SOWIE EIN SOLCHES ROHR**
METHOD FOR MAKING A MULTILAYERED PIPE COMPRISING MICROFIBERS, AND A PIPE SO PRODUCED
PROCÉDÉ DE FABRICATION D'UN TUYAU MULTICOUCHE COMPRENANT DES MICROFIBRES, ET TUYAU CORRESPONDANT

(43) Veröffentlichungstag der Anmeldung: 14.12.2016
(73) Patentinhaber: Hobas Engineering GmbH, 9020 Klagenfurt (AT)
(72) Erfinder: Simoner, Thomas, 9063 Maria Saal (AT)
(74) Vertreter: Schweiger, Johannes

(56) Entgegenhaltungen:
- EP-B1- 0 360 758
- WO-A1-00/37241
- WO-A1-86/05436
- WO-A1-98/56555
- DE-A1-102004 056 192
- DE-A1-102008 033 577
- US-A1- 2004 000 734
- US-A1- 2004 005 423

## Beschreibung

Die vorliegende Erfindung betrifft ein Verfahren zur Herstellung eines mehrschichtigen Rohrs nach Anspruch 1 sowie im Anspruch 6 ein danach hergestelltes mehrschichtiges Rohr.

Die EP 0360758 A2 offenbart ein Verfahren zur Herstellung von Rohrleitungsteilen aus Kunststoff, anorganischem Füllstoff und Glasfasern im Schleuderguss-Verfahren sowie ein nach diesem Verfahren hergestelltes Rohrleitungsteil. Innen liegende Schichten werden als praktisch reine Harzschichten ausgebildet, damit die Rohrwände möglichst glatt ausgebildet werden.

Die WO 98/56555 A1 betrifft ein Verfahren zur Herstellung von Rohrleitungsteilen aus Kunststoff und ein nach diesem Verfahren hergestelltes Rahrleitungsteil. Die US 2004/005423 A1 betrifft ein Verfahren zur Herstellung von Rohren mit einer Zentrifugalkraft.

Aufgabe der vorliegenden Erfindung ist es, ein möglichst stabiles Rohr mit einer möglichst glatten Rohrinnenkontur auszubilden.

Diese Aufgabe wird mit den Merkmalen der Patentansprüche 1 und 6 gelöst, wobei vorteilhafte Weiterbildungen der Erfindung in den Unteransprüchen angegeben sind. Bei angegebenen Wertebereichen sollen auch innerhalb der genannten Grenzen liegende Werte als Grenzwerte offenbart gelten und in beliebiger Kombination beanspruchbar sein.

Der Erfindung liegt der Gedanke zugrunde, die Innenschicht bei der Herstellung/Aufbringung der Innenschicht auf die Zwischenschicht(en) mit Mikrofasern zu versetzen, die während der Aufbringung, insbesondere mittels Zentrifugalbeschleunigung, von der Rohrinnenkontur weg entmischt werden. Die vorliegende Erfindung betrifft ein Verfahren zur Herstellung eines mehrschichtigen Rohrs mit einer eine Rohraußenkontur bildenden Außenschicht, einer eine Rohrinnenkontur bildenden Innenschicht sowie mindestens einer Zwischenschicht im Schleuderguss-Verfahren, wobei zur Bildung der Innenschicht eine Mischung aus Harz und Mikrofasern einer rotierenden Matrize zugeführt und durch Steuerung der Matrizendrehzahl während einer vorbestimmten Zeit eine vorbestimmte Entmischung des Harzes und der Mikrofasern erzeugt wird, wobei der Anteil der Mikrofasern in einer von der Rohrinnenkontur beginnenden Grenzschicht geringer ist als in einer der Zwischenschicht zugewandten Stabilitätsschicht.

Somit wird bei der Herstellung der das Rohr nach innen abschließenden Innenschicht (auch als Linerschicht bezeichnet) einerseits erreicht, dass diese an der Rohrinnenkontur glatt ist (insbesondere bedingt durch Schleuderkräfte und unterschiedliche Dichte von Harz und Mikrofaser im Gemisch), durch die Implementierung von Mikrofasern gleichzeitig aber eine hohe Stabilität aufweist.

Erfindungsgemäß werden insbesondere folgende Eigenschaften des Rohrs, insbesondere im Bereich der das Rohr nach innen abschließenden Innenschicht, verbessert:
- Verbesserung der Schlagunempfindlichkeit und/oder
- Vermeidung von Rissen und/oder
- Verbesserung der Chemikalienbeständigkeit (CSS) und/oder
- Verbesserung der Innendruckbeständigkeit durch Verstärkungseigenschaften der neu gebildeten Innenschicht und/oder
- Verbesserung der Ringverformbarkeit und/oder
- Verbesserung der Verarbeitbarkeit von hochtemperaturbeständigen Harzen im Schleuderverfahren (Vermeidung von Rissbildungen während des Produktionsprozesses) und/oder
- Verbesserung der Diffusionsdichtheit (Barrier layer/Sperrschicht).

In Weiterbildung der Erfindung weist die Mischung zumindest überwiegend, insbesondere vollständig, Mikrofasern mit einer Länge kleiner 4000 µm, insbesondere kleiner 2000 µm, vorzugsweise kleiner 1000 µm, noch bevorzugter kleiner 250 µm noch bevorzugter kleiner 125 µm, auf.

Alternativ oder zusätzlich weist die Mischung Mikrofasern mit einer durchschnittlichen Länge zwischen 50 µm und 500 µm, insbesondere zwischen 100 µm und 300 µm, vorzugsweise zwischen 125 µm und 250 µm, auf.

Auf diese Weise werden die Mikrofasern optimal durch die Zentrifugalbeschleunigung während der Rohrproduktion von der Rohrinnenkontur wegbewegt, indem die Mikrofasern, insbesondere mit einer Dichte von 2500-2600 kg/m³, insbesondere zumindest während der Rotation der Matrize, eine höhere Dichte aufweisen als das Harz (insbesondere Harz mit einer Dichte von 1000 kg/m³ bis 1200 kg/m³) und/oder weitere Bestandteile der Mischung.

Gemäß einer vorteilhaften Ausführungsform sind die Mikrofasern zumindest überwiegend, vorzugweise vollständig, aus Glasfasern gebildet. Diese sind in großer Menge und kostengünstig verfügbar, leicht verarbeitbar und weisen optimale chemisch-physikalische Eigenschaften auf.

Besonders vorteilhaft ist es, wenn die Mischung einen Anteil von 5% bis 50%, insbesondere von 10% bis 45%, vorzugsweise von 15% bis 40%, Mikrofasern enthält. In diesem Bereich kann eine optimale Entmischung bei gleichzeitiger Verbesserung der chemisch-physikalischen Eigenschaften erreicht werden.

Daneben betrifft die vorliegende Erfindung auch ein mehrschichtiges Rohr mit einer eine Rohraußenkontur bildenden Außenschicht, einer eine Rohrinnenkontur bildenden Innenschicht sowie mindestens einer Zwischenschicht, wobei die Innenschicht aus Harz und Mikrofasern gebildet ist und der Anteil der Mikrofasern in einer von der Rohrinnenkontur beginnenden Außenschicht geringer ist als in einer der Zwischenschicht zugewandten Stabilitätsschicht. Insbesondere weisen die Innenschicht (3) eine Dicke d_{L}, insbesondere zwischen 0,1 mm und 5 mm, und die Grenzschicht (3g) eine Dicke d_{g} kleiner d_{L}/2, vorzugsweise kleiner d_{L}/4, auf.

Soweit Merkmale oder Wertebereiche für das Verfahren offenbart sind, sollen diese auch für das Rohr als offenbart gelten.

Weitere Vorteile, Merkmale und Einzelheiten der Erfindung ergeben sich aus der Beschreibung bevorzugter Ausführungsbeispiele sowie anhand der Zeichnung. Diese zeigt in:
- Figur 1: eine Querschnittsansicht einer Ausführungsform einer Wandung eines erfindungsgemäßen Rohrs,
- Figur 2a: eine Vergrößerung A der Wandung gemäß Figur 1 beim Aufbringen einer Innenschicht und
- Figur 2b: eine Vergrößerung A der Wandung gemäß Figur 1 beim Entmischen.

In den Figuren sind gleiche oder gleichwirkende Bauteile mit gleichen Bezugszeichen gekennzeichnet.

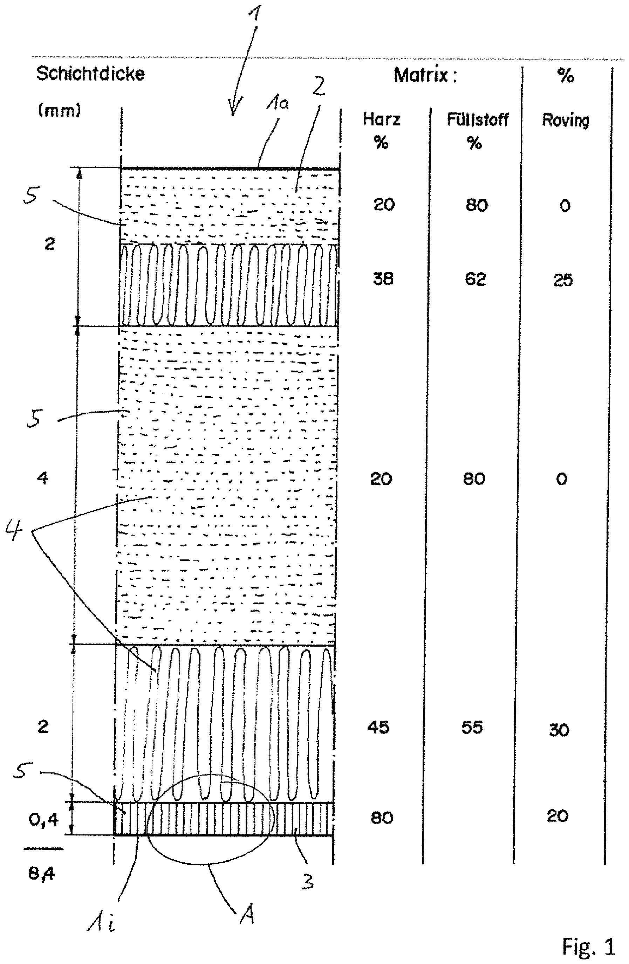

In der Figur 1 ist ein aus mehreren Zwischenschichten 4 und einer die Zwischenschichten 4 nach außen bedeckenden Außenschicht 2 sowie einer die Zwischenschichten 4 nach innen bedeckenden Innenschicht 3 gebildetes Rohr 1 vergrößert und abschnittsweise dargestellt.

Die Zwischenschichten 4 weisen verschiedene Funktionen auf, um das Rohr 1 stabil auszubilden. So bestehen diese teilweise aus Harz, Füllstoffen und als Roving bezeichneten Glasfasern.

Das Rohr 1 wird im Schleuderverfahren beziehungsweise Schleudergussverfahren hergestellt, wie dieses grundsätzlich in der EP 0 360 758 A2 beschrieben ist. Mit einer Matrize werden die Schichten beginnend mit der Außenschicht 2 über die verschiedenen Zwischenschichten 4 bis zur Innenschicht 3 in einer rotierenden Matrize eingeschleudert.

Das Material der verschiedenen Schichten wird über eine Lanze in die Matrize eingebracht, wobei über die Lanze jeweils eine Mischung der Bestandteile der verschiedenen Schichten zugeführt wird. Beispiele für Mischungsverhältnisse sind in der Figur 1 in Prozentzahlen angegeben.

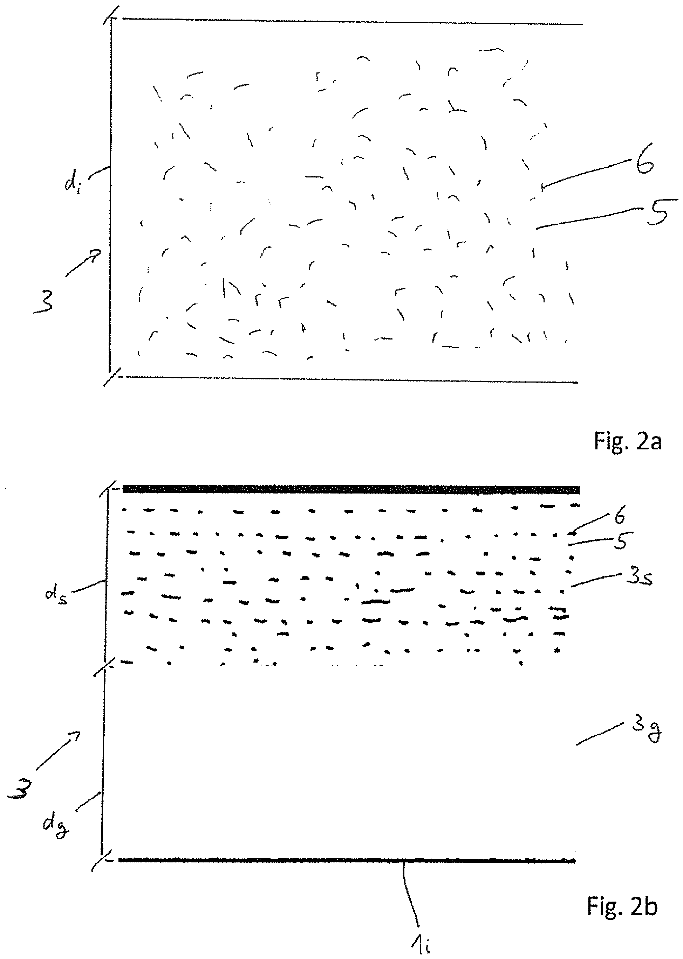

Die Besonderheit des Rohrs 1 gemäß der Ausführungsform besteht in der Einbringung der Innenschicht 3, die im Unterschied zum Stand der Technik als Mischung aus Harz 5 und Mikrofasern 6 eingebracht wird. Die Mikrofasern 6 sind in dem Harz 5 so angeordnet, dass diese zunächst gemäß Figur 2a etwa gleich verteilt über die Dicke dᵢ der Innenschicht 3 sind. Durch die Rotation der Matrize wird eine Zentrifugalkraft erzeugt, mit der die Mirkofasern 6 aufgrund der höheren Dichte in der Innenschicht 3 entmischt werden, die Mikrofasern bewegen sich in Richtung Rohraußenseite.

Nach einer Entmischungszeit, während der insbesondere auch das Harz 5 langsam aushärtet, wird eine Grenzschicht 3g, die überwiegend aus Harz mit einem höheren Harzanteil als eine daran anschließend Stabilitätsschicht 3s mit einer Dicke dₛ, gebildet. Die Stabilitätsschicht 3s weist aufgrund der Mehrzahl an Mikrofasern 6 eine höhere Stabilität auf als die Grenzschicht 3g. Die Grenzschicht 3g weist dagegen an der Rohrinnenkontur 1i eine äußerst glatte Oberfläche auf.

Somit weist die Innenschicht 3 im Gegensatz zu bisherigen Innenschichten 3 bessere Rohreigenschaften auf mit dem Effekt, dass das Rohr 1 insgesamt dünner ausgebildet werden kann.

Die Mikrofasern sind als Glasfasern ausgebildet. Die für die Innenschicht 3 über die Lanze zugeführte Mischung aus Mikrofasern 6 und Harz 5 weist ein Mischungsverhältnis von 1:2 (ein Teil Mikrofasern auf zwei Teile Harz) auf.

### Bezugszeichenliste

- 1: Rohr
- 1i: Rohrinnenkontur
- 1a: Rohraußenkontur
- 2: Außenschicht
- 3: Innenschicht
- 3 g: Grenzschicht
- 3s: Stabilitätsschicht
- 4: Zwischenschicht(en)
- 5: Harz
- 6: Mikrofasern
- d_{L}: Dicke Innenschicht
- d_{g}: Dicke Grenzschicht
- dₛ: Dicke Stabilitätsschicht

## Patentansprüche

1. Verfahren zur Herstellung eines mehrschichtigen Rohrs (1) mit einer eine Rohraußenkontur (1a) bildenden Außenschicht (2), einer eine Rahrinnenkontur (1i) bildenden Innenschicht (3) sowie mindestens einer Zwischenschicht (4) im Schleuderguss-Verfahren, **dadurch gekennzeichnet, dass** zur Bildung der Innenschicht (3) eine Mischung aus Harz (5) und Mikrofasern (6) einer rotierenden Matrize zugeführt und durch Steuerung der Matrizendrehzahl während einer vorbestimmten Zeit eine vorbestimmte Entmischung des Harzes (5) und der Mikrofasern (6) erzeugt wird, wobei der Anteil der Mikrofasern (6) in einer von der Rohrinnenkontur (1i) beginnenden Grenzschicht (3g) geringer ist als in einer der Zwischenschicht (4) zugewandten Stabilitätsschicht (3s).

2. Verfahren nach Anspruch 1, wobei die Mischung zumindest überwiegend, insbesondere vollständig, Mikrofasern (6) mit einer Länge kleiner 4000 µm, insbesondere kleiner 2000 µm, vorzugsweise kleiner 1000 µm, noch bevorzugter kleiner 250 µm, noch bevorzugter kleiner 125 µm, aufweist.

3. Verfahren nach Anspruch 1 oder 2, wobei die Mischung Mikrofasern (6) mit einer durchschnittlichen Länge zwischen 50 µm und 500 µm, insbesondere zwischen 100 µm und 300 µm, vorzugsweise zwischen 125 µm und 250 µm, aufweist.

4. Verfahren nach einem der vorhergehenden Ansprüche, wobei die Mikrofasern (6) zumindest überwiegend, vorzugweise vollständig, aus Glasfasern gebildet sind.

5. Verfahren nach einem der vorhergehenden Ansprüche, wobei die Mischung einen Anteil von 5% bis 50%, insbesondere von 10% bis 45%, vorzugsweise von 15% bis 40%, Mikrofasern (6) enthält.

6. Mehrschichtiges Rohr (1) mit einer eine Rohraußenkontur (1a) bildenden Außenschicht (2), einer eine Rohrinnenkontur (1i) bildenden Innenschicht (3) sowie mindestens einer Zwischenschicht (4), **dadurch gekennzeichnet, dass** die Innenschicht (3) aus Harz (5) und Mikrofasern (6) gebildet ist und der Anteil der Mikrofasern (6) in einer von der Rohrinnenkontur (1i) beginnenden Grenzschicht (3g) geringer ist als in einer der Zwischenschicht (4) zugewandten Stabilitätsschicht (3s).

7. Rohr nach Anspruch 6, wobei die Mikrofasern (6) zumindest überwiegend, insbesondere vollständig, eine Länge kleiner 4000 µm, insbesondere kleiner 2000 µm, vorzugsweise kleiner 1000 µm, noch bevorzugter kleiner 250 µm, noch bevorzugter kleiner 125 µm, aufweisen.

8. Rohr nach einem der Ansprüche 6 oder 7, bei dem die Mikrofasern (6) eine durchschnittliche Länge zwischen 50 µm und 500 µm, insbesondere zwischen 100 µm und 300 µm, vorzugsweise zwischen 125 µm und 250 µm, aufweisen.

9. Rohr nach einem der Ansprüche 6 bis 8, bei dem die Mikrofasern (6) zumindest überwiegend, vorzugweise vollständig, aus Glasfasern gebildet sind.

10. Rohr nach einem der Ansprüche 6 bis 9, bei dem die Innenschicht (3) einen Anteil von 5% bis 50%, insbesondere von 10% bis 45%, vorzugsweise von 15% bis 40%. Mikrofasern (6) enthält.

11. Rohr nach einem der Ansprüche 6 bis 10, bei dem die Innenschicht (3) eine Dicke d_{L}, insbesondere zwischen 0,1 mm, und 5 mm, und die Grenzschicht (3g) eine Dicke d_{g} kleiner d_{L}/2, vorzugsweise kleiner d_{L}/4, aufweisen.

## Claims

1. Method for making a multilayered pipe (1) having an outer layer (2) forming an outer pipe contour (1a), an inner layer (3) forming an inner pipe contour (1i) as well as at least one intermediate layer (4) by an centrifugal casting process, **characterized in that**, for the formation of the inner layer (3) a mixture of resin (5) and microfibers (6) is fed into a rotating die and a predetermined demixing of the resin (5) and the microfibers (6) is created during a predetermined time by controlling the rotational speed of the die, wherein the amount of the microfibers (6) is lower in a boundary layer (3g) starting from the inner pipe contour (1i) than in a stability layer (3s) facing the intermediate layer (4).

2. Method according to claim 1, wherein the mixture at least predominantly, especially completely, comprises microfibers (6) having a length smaller than 4000 µm, especially smaller than 2000 µm, preferably smaller than 1000 µm, even more preferably smaller than 250 µm, even more preferably smaller than 125 µm.

3. Method according to claim 1 or 2, wherein the mixture comprises microfibers (6) having an average length between 50 µm and 500 µm, especially between 100 µm and 300 µm, preferably between 125 µm and 250 µm.

4. Method according to any of the preceding claims, wherein the microfibers (6) are at least predominantly, preferably completely, formed from glass fibers.

5. Method according to any of the preceding claims, wherein the mixture contains an amount from 5% to 50%, especially from 10% to 45%, preferably from 15% to 40%, of microfibers (6).

6. Multilayered pipe (1) having an outer layer (2) forming an outer pipe contour (1a), an inner layer (3) forming an inner pipe contour (1i) as well as at least one intermediate layer (4), **characterized in that** the inner layer (3) is formed from resin (5) and microfibers (6) and the amount of the microfibers (6) is lower in a boundary layer (3g) starting from the inner pipe contour (1i) than in a stability layer (3s) facing the intermediate layer (4).

7. Pipe according to claim 6, wherein the microfibers (6) at least predominantly, especially completely, have a length smaller than 4000 µm, especially smaller than 2000 µm, preferably smaller than 1000 µm, even more preferably smaller than 250 µm, even more preferably smaller than 125 µm.

8. Pipe according to one of claims 6 or 7, whereby the microfibers (6) have an average length between 50 µm and 500 µm, especially between 100 µm and 300 µm, preferably between 125 µm and 250 µm.

9. Pipe according to any of claims 6 to 8, whereby the microfibers (6) are at least predominantly, preferably completely, formed from glass fibers.

10. Pipe according to any of claims 6 to 9, whereby the inner layer (3) contains an amount from 5% to 50%, especially from 10% to 45%, preferably from 15% to 40%, of microfibers (6).

11. Pipe according to any of claims 6 to 10, whereby the inner layer (3) comprises a thickness d_{L}, especially between 0.1 mm and 5 mm, and the boundary layer (3g) comprises a thickness d_{g} smaller than d_{L}/2, preferably smaller than d_{L}/4.

## Revendications

1. Procédé de fabrication d'un tuyau multicouche (1) doté d'une couche extérieure (2) formant un contour extérieur de tuyau (1a), d'une couche intérieure (3) formant un contour intérieur de tuyau (1i) ainsi que d'au moins une couche intermédiaire (4) par procédé de moulage par centrifugation, **caractérisé en ce qu'**un mélange de résine (5) et de microfibres (6) est conduit à une matrice rotative pour former la couche intérieure (3) et par la commande du nombre de tour de la matrice pendant un temps prédéfini est produite une démixtion prédéfinie de la résine (5) et des microfibres (6), la proportion de microfibres (6) étant plus faible dans une couche limite (3g) commençant par le contour intérieur du tuyau (1i) que dans une couche de stabilité (3s) tournée vers la couche intermédiaire (4).

2. Procédé selon la revendication 1, selon lequel le mélange présente au moins majoritairement, en particulier intégralement, des microfibres (6) d'une longueur inférieure à 4 000 µm, en particulier inférieure à 2 000 µm, de préférence inférieure à 1 000 µm, plus préférablement inférieure à 250 µm, plus préférablement inférieure à 125 µm.

3. Procédé selon la revendication 1 ou 2, selon lequel le mélange présente des microfibres (6) d'une longueur moyenne comprise entre 50 µm et 500 µm, en particulier entre 100 µm et 300 µm, de préférence entre 125 µm et 250 µm.

4. Procédé selon l'une des revendications précédentes, selon lequel les microfibres (6) sont constituées au moins majoritairement, de préférence intégralement, de fibres de verre.

5. Procédé selon l'une des revendications précédentes, selon lequel le mélange contient une proportion de 5 % à 50 %, en particulier de 10 % à 45 %, de préférence de 15 % à 40 % de microfibres (6).

6. Tuyau multicouche (1) doté d'une couche extérieure (2) formant un contour extérieur de tuyau (1a), d'une couche intérieure (3) formant un contour intérieur de tuyau (1i) ainsi que d'au moins une couche intermédiaire (4), **caractérisé en ce que** la couche intérieure (3) est constituée de résine (5) et de microfibres (6) et que la proportion de microfibres (6) est plus faible dans une couche limite (3g) commençant par le contour intérieur de tuyau (1i) que dans une couche de stabilité (3s) tournée vers la couche intermédiaire (4).

7. Tuyau selon la revendication 6, selon lequel les microfibres (6) présentent au moins majoritairement, en particulier intégralement, une longueur inférieure à 4 000 µm, en particulier inférieure à 2 000 µm, de préférence inférieure à 1 000 µm, plus préférablement inférieure à 250 µm, plus préférablement inférieure à 125 µm.

8. Tuyau selon l'une des revendications 6 ou 7, dans lequel les microfibres (6) présentent une longueur moyenne comprise entre 50 µm et 500 µm, en particulier entre 100 µm et 300 µm, de préférence entre 125 µm et 250 µm.

9. Tuyau selon l'une des revendications 6 à 8, dans lequel les microfibres (6) sont constituées au moins majoritairement, de préférence intégralement, de fibres de verre.

10. Tuyau selon l'une des revendications 6 à 9, dans lequel la couche intérieure (3) contient une proportion de 5 % à 50 %, en particulier de 10 % à 45 %, de préférence de 15 % à 40 %, de microfibres (6).

11. Tuyau selon l'une des revendications 6 à 10, dans lequel la couche intérieure (3) présente une épaisseur d_{L}, en particulier comprise entre 0,1 mm et 5 mm et la couche limite (3g) une épaisseur d_{g} inférieure à d_{L}/2, de préférence inférieure à d_{L}/4.
